# EUROPÄISCHE PATENTSCHRIFT

(11) **EP 2 399 726 B1**
(45) Veröffentlichungstag und Bekanntmachung des Hinweises auf die Patenterteilung: **13.01.2016**
(21) Anmeldenummer: 11005160.4
(22) Anmeldetag: 24.06.2011
(51) Int. Cl.: B29C 70/44, B29C 33/40, B29C 70/54

(54) **Formwerkzeug zur Herstellung von Faserverbundbauteilen und Verfahren zur Herstellung von Faserverbundbauteilen mit einem solchen Formwerkzeug**
Moulding tool for producing fibre compound components and method for producing fibre compound components with such a moulding tool
Outil de formage pour la fabrication de composants composites en fibres et procédé de fabrication de composants composites en fibres à l'aide d'un tel outil de formage

(30) Priorität: 24.06.2010 DE 102010024985
(43) Veröffentlichungstag der Anmeldung: 28.12.2011
(73) Patentinhaber: Deutsches Zentrum für Luft- und Raumfahrt e.V., 51147 Köln (DE)
(72) Erfinder: Hanke, Michael, 38122 Braunschweig (DE); Malzahn, Sebastian, 21680 Stade (DE); Kühn, Michael, 21723 Hollern-Twielenfleth (DE)
(74) Vertreter: Aisch, Sebastian

(56) Entgegenhaltungen:
- WO-A1-02/02299
- WO-A2-01/76863
- CA-A1- 2 487 738
- US-A- 5 151 277
- US-A- 5 374 388
- US-A- 5 439 635
- US-A1- 2007 278 718
- US-B1- 6 298 896

## Beschreibung

Die Erfindung betrifft ein Formwerkzeug zur Herstellung von Faserverbundbauteilen, bei denen ein Fasergelege mit einem Matrixmaterial durchtränkt wird, mit einer Unterform und einer auf die Unterform mit zwischenliegendem Fasergelege auflegbaren Oberform, wobei Unterform und Oberform eine aufeinander und auf die gewünschte Form des Faserverbundbauteils abgestimmte Kontur haben.

Die Erfindung betrifft weiterhin ein Verfahren zur Herstellung von Faserverbundbauteilen mit einem solchen Formwerkzeug durch Auflegen eines Fasergeleges auf eine Unterform und Schließen des Formwerkzeuges durch Auflegen einer Oberform auf die Unterform mit zwischenliegendem Fasergelege.

Faserverbundwerkstoffe, insbesondere kohlenstofffaserverstärkte Kunststoffe und glasfaserverstärkte Kunststoffe, sind in vielfältiger Form, insbesondere bei der Herstellung von Luftfahrzeugen, im Einsatz. Dabei werden vermehrt auch kritische Komponenten, wie Tragflächen und Flügelmittelkästen aus Faserverbundwerkstoffen hergestellt.

Die Halbzeugkosten der verwendeten Materialien sind vergleichsweise hoch und lassen sich durch das Herstellungsverfahren nur schwer reduzieren. Hauptsächlich gelingt dies nur **über** Materialverschnitt und Nachbearbeitungen. Hohe Kosten entfallen außerdem auf die Herstellung von Formen, die für die Serienfertigung von Strukturelementen verwendet werden. Derartige Formen werden meistens aus metallischen Werkstoffen in einem geeigneten Verfahren, wie z.B. Fräsen, hergestellt. Diese Formen sind damit sehr präzise, aber auch schwer, aufwendig und teuer.

Wegen der Genauigkeit der Werkzeuge lässt sich die Qualität eines Bauteils auch durch Automatisierung z.B. durch Zusammenfassung und Verkürzung von einzelnen Arbeitsvorgängen weiter erhöhen. Dies führt gleichzeitig zu einer Verringerung der Herstellungskosten. Bei den verfügbaren Fertigungsverfahren erfolgt zunächst der Zuschnitt des Fasergeleges und im Anschluss das Ablegen des Fasergeleges auf dem Werkzeug. Beides kann manuell oder automatisiert erfolgen, wobei die Unterschiede in Investitionskosten für die Anlagen und den Betrieb dem erzielten Ergebnis sowie der Produzierbarkeit gegenüberstehen.

Insbesondere bei nicht ebenen Strukturen, aber auch bedingt durch das Halbzeug, ist zudem ein Vorformen (Preforming) erforderlich. Entweder durch die Anwendung eines so genannten Binders, Wärmezufuhr oder Applizieren eines Vakuums bzw. eine geeignete Kombination, wird das ebene Faserhalbzeug in die erforderliche Form gebracht. Multiaxialgelege, die ggf. nicht umgeformt werden müssen, sind nicht für alle Geometrien geeignet und zudem sehr teuer.

Im Anschluss an das Preforming wird die Form versiegelt bzw. geschlossen und es folgt die Aushärtung bzw. Harzinjektion in einem Autoklaven. Die Verwendung eines kalthärtenden Harzsystems und der Verzicht auf den Autoklaven sind möglich, führen aber zu einer Verringerung der Bauteilqualität.

Der Vorgang des Vorformens (Preforming) ist mit großem Aufwand und zusätzlichen Kosten verbunden. Der Einsatz eines Binders erfordert neben dessen Materialkosten eine Wärmezufuhr, die bauteilabhängig auch nach jeder Lage erforderlich sein kann. Wird mit Vakuumtechnik gearbeitet, entsteht neben dem damit verbundenen Zeitaufwand ein erhöhtes Abfallvolumen und ebenfalls zusätzliche Kosten.

Auf der Seite der Formwerkzeuge entfallen hohe Kosten für das Material selbst aber auch für die Herstellung der Formen. Die Bearbeitung ist langwierig und aufwendig. Bei z.B. in der Luftfahrt typischen Baulängen von mehreren Metern sind damit große Bearbeitungsanlagen erforderlich. Werkzeuge dieser Dimension sind außerdem sehr schwer und somit schlecht handhabbar.

Die Fertigung eines Bauteils erfolgt in mehreren Schritten, wobei insbesondere das Vorformen und Siegeln sehr aufwendig sind.

Zudem sind metallische Formwerkzeuge unflexibel. Sofern sich beispielsweise die Krümmung eines Strukturelementes ändert, ist eine vollständige Neuanfertigung des betreffenden Formwerkzeuges unvermeidlich. Insbesondere wenn sich während der Entwicklungsphase einer Struktur derartige Parameter ändern, fallen dadurch erhebliche Zusatzkosten an.

Die beschriebenen Einflüsse führen in ihrer Gesamtheit zu gesteigerten Herstellungskosten von Faserverbundbauteilen insbesondere bei kleinen Stückzahlen und verringern die erzielbaren Fertigungsraten. Die Wirtschaftlichkeit des Herstellungsverfahrens wird somit nachteilig beeinflusst. Allgemein können mit einem starren Werkzeug Änderungen der vorgesehenen Struktur nicht mehr berücksichtigt werden. Solche Änderungen können beispielsweise Erhebungen und Senken sein, die durch eine lokale Dickenänderung der Auflagefläche bedingt sind.

Aus der WO 02/02299 A1 ist ein Formwerkzeug gemäß dem Oberbegriff des Anspruchs 1 bekannt, bei dem ein Faserhalbzeug zwischen zwei flexiblen Formkörper eingespannt wird. Durch eine Oberfläche 9, die von unten an das Sandwich angedrückt wird, kann die Kontur des Faserhalbzeuges geändert werden.

Aus der US 5,374,388 ist ein Reparaturset zum Reparieren von beschädigten Bauteilen aus Faserverbundwerkstoffen bekannt, wobei zunächst mit Hilfe eines flexiblen Materials ein Formabdruck genommen wird, an dem anschließend das Reparaturpatch angepasst wird.

Aus der CA 2 487 738 A1 ist ein Formwerkzeug mit einer flexiblen Oberfläche bekannt, um entsprechende Druckverhältnisse beim Aushärten des Faserverbundbauteils anzupassen.

Aus der US 2007/0278718 A1 ist ein Formwerkzeug mit zwei flexiblen Membranen bekannt, die in einem festen Rahmen eingespannt sind. Um die Kontur zu verändern, kann eine Oberfläche in die Membran gedrückt werden.

Aus der WO 01/76863 A2 ist ein Formwerkzeug bekannt, bei dem ebenfalls das Faserhalbzeug zwischen zwei flexiblen Membranen eingelegt wird. Mit Hilfe von Aktuatoren, die von unten auf das Werkzeug drücken, kann die Kontur und Form des Faserhalbzeuges verändert werden.

Aus der US 6,298,896 B1 ist eine flexible formgebende Vorrichtung bekannt, mit der Komposit-Materialien herstellbar sind, wobei nur lediglich eine einzige Oberfläche flexibel ausgestaltet ist.

Aus der US 5,151,277 ist eine Vorrichtung bekannt, bei der zwei flexible Membranen mit Hilfe von Stellgliedern so verändern werden können, dass die Kontur eines dazwischen liegenden Faserhalbzeuges verändert werden kann.

Aus der US 5,439,635 ist ein Formwerkzeug bekannt, dass mindestens eine formgebende flexible Werkzeugoberfläche hat. Darauf wird das Faserhalbzeug angeordnet, das dann mit einem Vakuumsack bzw. mit einer Vakuumfolie abgedeckt werden soll.

Aus der EP 1 277 563 A1 ist ein Verfahren und eine Vorrichtung zur Herstellung eines Formkörpers bekannt, bei dem der Formkörper zwischen zwei flexiblen Schalen eingebracht wird und anschließend die Form bestehend aus den flexiblen Schalen allseitig mit einem Druckmedium beaufschlagt wird.

Ausgehend hiervon ist es daher Aufgabe der vorliegenden Erfindung, ein verbessertes Formwerkzeug und ein verbessertes Verfahren zur Herstellung von Faserverbundbauteilen zu schaffen, mit denen auch geringe Mengen gleichartiger Faserverbundbauteile hinsichtlich der zwei- oder dreidimensionalen Ausrichtung flexibel anpassbar gefertigt werden können.

Die Aufgabe wird durch das Formwerkzeug gemäß Anspruch 1 sowie mit dem Verfahren gemäß Anspruch 6 gelöst.

Auf diese Weise lässt sich die Krümmung und Torsion des hergestellten Faserverbundbauteils einfach durch Änderung der Krümmung der flexiblen Oberund Unterform an die gewünschte Formgebung anpassen. Ober- und Unterform müssen nur auf eine geeignet ausgestaltete feste Oberfläche aufgelegt werden. Durch das flexible Material nimmt die Ober- und Unterform dann die gewünschte Krümmung an.

Die grundlegende Kontur des Faserverbundbauteils wird durch geeignete Ausformung der Ober- und Unterform festgelegt. Die Ausrichtung dieser Korrektur im Raum kann im zweiten Schritt durch die Flexibilität des Materials der Ober- und Unterform vorgegeben werden.

Die Oberform und die Unterform haben zwei voneinander beabstandet angeordnete, ringförmig umlaufende Nuten und/oder Wulste. Auf diese Weise werden eine innere Abdichtung und eine äußere Abdichtung geschaffen. Im Zwischenraum zwischen der inneren Abdichtung und der äußeren Abdichtung sollte dann mindestens ein Ansaugstutzen für eine Absaugeinheit zur Herstellung eines abdichtenden Unterdrucks in dem Zwischenraum vorhanden sein. Mit Hilfe dieses evakuierbaren Zwischenraums ist eine schnelle, einfache und sehr zuverlässige Abdichtung des Formwerkzeugs möglich.

Damit ist es insbesondere im Prozess der Entwicklung von Strukturen aus Faserverbundwerkstoffen möglich, kostengünstig und schnell eine vorgegebene Geometrie zu fertigen, ohne dass die Genauigkeit vernachlässigt wird. Die aus flexiblem Material hergestellten Ober- und Unterformen sind relativ einfach herstellbar und ermöglichen trotz der reduzierten Kosten eine schnelle Fertigung von Strukturbauteilen mit hoher Genauigkeit.

Die aus flexiblem Material gebildeten Ober- und Unterformen können für die Herstellung von Faserverbundbauteilen mittels Nasstechnologie (RTM, SLI) oder Prepreg-Technologie genutzt werden.

Besonders vorteilhaft ist es dann, wenn in die Unterform und/oder in die Oberform mindestens ein Injektionsstutzen/Evakuationsstutzen für Matrixmaterial (Matrixwerkstoff/Harz)integriert ist.

Weiterhin ist es insbesondere zur Herstellung von Faserverbundbauteilen mit der Injektions- und Prepreg-Technologie vorteilhaft, wenn eine Angusslinie mit dem Injektionsstutzen verbunden und an der Auflageseite der Oberform und/oder Unterform für die auf die Auflageseite mit zwischenliegendem Fasergelege auflegbare Gegenform in die Oberform und/oder Unterform eingebracht ist. Der Zwischenraum zwischen Unter- und Oberform wird dann mit dem Injektionsstutzen evakuiert, so dass Luft und überschüssiges Matrixmaterial, entfernt wird.

Weiterhin ist es vorteilhaft, wenn an der Auflageseite der Oberform und/oder Unterform für die auf die Auflageseite mit dazwischenliegendem Fasergelege auflegbare Gegenform eine Kavität in die Oberform und/oder Unterform eingebracht ist. Damit kann das in der Kavität gespeicherte harzhaltige Matrixmaterial durch das Fasergelege gezogen und Luftblasen und überschüssiges Matrixmaterial über den Injektionsstutzen abgezogen werden. Das Absaugen erfolgt mit Hilfe der Angusslinie über eine durch die Angusslinie definierte Breite des Fasermaterials relativ gleichmäßig. Damit ist kein Zusatzmaterial in Form einer Vakuumfolie oder eines Dichtbandes erforderlich. Ebenso entfällt der Vorgang des Siegelns, da das Formwerkzeug selbst vakuumdicht abschließt. Der damit verbundene Arbeitsaufwand verringert sich.

Optional kann das Matrixmaterial über den Injektionsstutzen auch in den Zwischenraum eingebracht und teilweise wieder über einen Absaugstutzen in der Kavität abgezogen werden.

Besonders vorteilhaft ist es, wenn eine der Unterform und/oder Oberform auf der Auflageseite für die Gegenseite mindestens eine ringförmig umlaufende Nut und die Gegenform mindestens einen an die zugeordneten Nut angepassten, die Gegenform ringförmig umlaufenden Wulst zum Eintauchen in die Nut und Abdichten des Formwerkzeuges nach Außen hat. Mit Hilfe einer solchen umlaufenden Dichtung können Oberform und Unterform sehr schnell und einfach luftdicht miteinander gekoppelt werden. Das zusätzliche Siegeln der flexiblen Ober- und Unterform ist nicht erforderlich. Damit kann Material- und Zeitaufwand eingespart werden.

Die Erfindung wird weiterhin durch das Verfahren der eingangs genannten Art gelöst durch die Schritte:
- Formgeben einer definierten dreidimensionalen Ausrichtung des Faserverbundbauteils durch Auflegen des flexiblen Formwerkzeuges auf eines feste, an die gewünschte Ausrichtung angepasste Unterlage und
- Aushärten des mit einem Matrixmaterial (Matrixwerkstoff/Harz) durchtränkten Faserverbundbauteils.

Das flexible Formwerkzeug ermöglicht es, eine durch das Formwerkzeug vorgegebenen Kontur an eine gewünschte dreidimensionale Ausrichtung anzupassen, die durch eine feste, an die gewünschte Ausrichtung angepasste Unterlage vorgegeben ist. Nach Einlegen des Fasergeleges auf die Unterform, Schließen des Formwerkzeuges und Auflegen einer Oberform auf die Unterform mit zwischenliegendem Fasergelege und Vorgeben der dreidimensionalen Ausrichtung durch Auflegen des flexiblen Formwerkzeugs auf die entsprechend angepasste feste Unterlage kann das mit Matrixmaterial durchtränkte Faserverbundbauteil ausgehärtet werden. Das Endprodukt hat dann die durch das flexible Formwerkzeug vorgegebene Kontur in der durch die feste Unterlage definierten dreidimensionalen Ausrichtung.

Dabei wird das Formwerkzeug durch Evakuieren eines Zwischenraumes zwischen einer inneren Abdichtung und einer äußeren Abdichtung, die durch Einführen von ringförmig umlaufenden Wulsten einer Form in zugeordneten Nuten der gegenüberliegenden Form geschaffen werden, abgedichtet.

Nach Einlegen von Fasergelege zwischen Unterform und Oberform, Auflegen der Oberform auf die Unterform mit zwischenliegendem Fasergelege und Abdichten des Formwerkzeuges ist es dann einfach möglich, Matrixmaterial in den das Fasergelege enthaltenen Zwischenraum zu injizieren und das dann durchtränkte Faserverbundbauteil aushärten zu lassen.

Es ist ebenfalls möglich, ein bereits mit dem Matrixmaterial getränktes Halbzeug (Preprey) zu verwenden. Bei diesem ist keine Injektion mit einem Harz erforderlich. Für eine bessere Bauteilqualität wird die Umgebung um das Bauteil evakuiert und bei erhöhtem Druck ausgehärtet.

Die Erfindung wird nachfolgend anhand eines Ausführungsbeispiels mit den beigefügten Zeichnungen näher erläutert. Es zeigen:
- Figur 1 -: Skizze einer Draufsicht auf die Auflageseite einer Oberform;
- Figur 2 -: Querschnittsansicht der Oberform aus Figur 1;
- Figur 3 -: Ausschnittsansicht eines Ansaugstutzens zwischen einer inneren und äußeren Abdichtung;
- Figur 4 -: Skizze einer Draufsicht auf die Auflageseite einer an die Oberform aus Figur 1 angepassten Unterform;
- Figur 5 -: Querschnittsansicht der Unterform aus Figur 4 und
- Figur 6 -: Formwerkzeug mit Unter- und Oberform und zwischenliegendem Fasergelege.

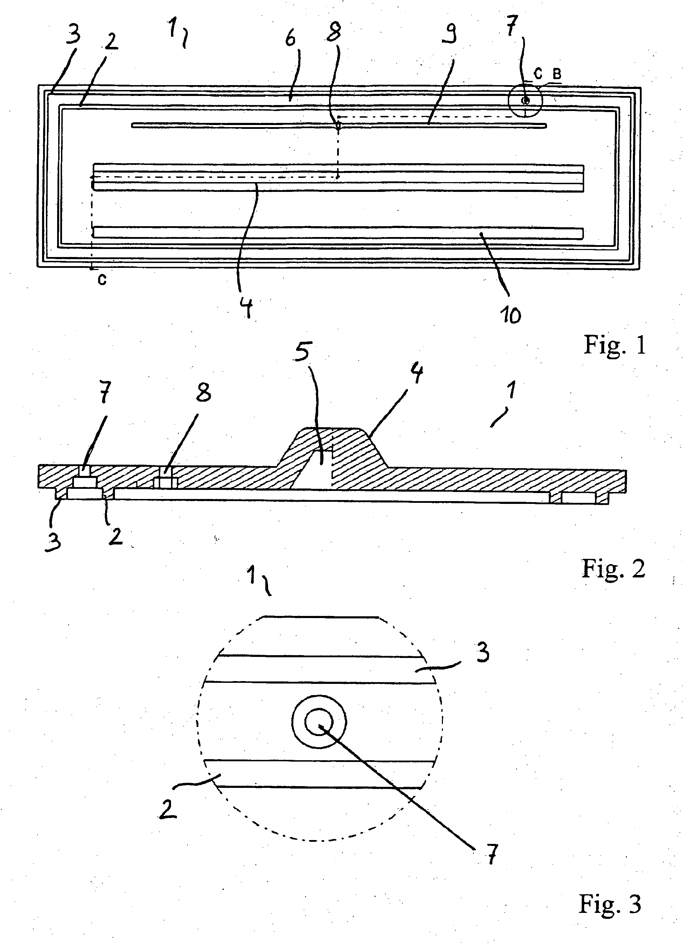

Figur 1 lässt eine Skizze einer Oberform 1 in der Draufsicht auf die Auflagefläche für ein Fasergelege erkennen. Die Oberform 1 ist aus einem flexiblen Material, vorzugsweise aus silikonhaltigem Material, erstellt. Hierzu wird die erforderliche Geometrie des gewünschten Faserverbundbauteils durch eine Urform abgebildet. Diese Urform wird dann mit einem Silikon abgeformt und bildet damit die zu erzeugende Bauteilgeometrie. Alternativ kann auch eine direkte Herstellung von Unter- und Oberform mit einer Matrize per Extrusion erfolgen.

Die Oberform 1 wird an ihren äußeren Randbereichen mit einer inneren Abdichtung 2 und einer äußeren Abdichtung 3 in ihrem Innenraum luftdicht verschlossen. Hierzu ist für die innere und äußere Abdichtung 2, 3 jeweils eine ringförmig den Randbereich umlaufende Nut oder Wulst vorgesehen.

Aus der Figur 2, die die Oberform der Figur 1 im Querschnitt zeigt, wird erkennbar, dass die innere und äußere Abdichtung 2, 3 jeweils mit einem ringförmig umlaufenden Wulst gebildet wird. Die Wulste der inneren und äußeren Abdichtung 2, 3 ragen von der Auflageoberfläche der Oberform 1 hervor.

In dem dargestellten Ausführungsbeispiel hat die Kontur für das Faserverbundbauteil zur Bildung eines Spants für einen Flugzeugrumpf in der Mitte eine sich über den größten Teil der Länge erstreckende Erhebung 4, die durch eine in die Oberform eingebrachte Mulde 5 geschaffen wird.

Um die Oberform 1 luftdicht auf eine Unterform aufzubringen, sind die innere und äußere Abdichtung 2, 3 mit einem Zwischenraum 6 voneinander beabstandet. Dieser Zwischenraum 6 kann mit Hilfe eines Ansaugstutzens 7 im Zwischenraum 6 durch Ansaugen der im Zwischenraum 6 befindlichen Luft und Herstellen eines Unterdrucks evakuiert werden. Dieser Ansaugstutzen 7 ist nochmals im Ausschnitt in der Draufsicht in Figur 3 dargestellt.

Hieraus und aus dem Querschnitt der Figur 1 wird deutlich, dass die Bohrung des Ansaugstutzens 7 gestuft mit unterschiedlichen Durchmessern ist. Das hat den Vorteil, dass an die Bohrungen Schlauchanschlüsse besser befestigt werden können und der Übergang von dem Schlauchanschluss zu dem Zwischenraum 6 bzw. Werkzeuginnenraum verbessert wird.

Weiterhin ist ein Injektionsstutzen 8 im Innenraum der Oberform 1 in die Oberform 1 integriert. Dieser Injektionsstutzen 8 ist z. B. ebenfalls als gestufte Bohrung mit unterschiedlichen Durchmessern ausgeführt, wie in Figur 2 skizziert ist. Vom Injektionsstutzen 8 erstreckt sich zu beiden Seiten eine Angusslinie 9, mit der Luftblasen und überschüssiges harzhaltiges Matrixmaterial gleichmäßig über die durch die Angusslinie 9 definierte Breite aus dem auf die Oberform 1 aufgelegten Fasergelege abgezogen werden kann.

Gegenüberliegend zur Angusslinie ist eine sich parallel zur Angusslinie 9 erstreckende Kavität 10 vorgesehen, die sich mit überschüssigem Matrixmaterial und ggf. Fremdkörpern sowie Luft füllt.

Optional kann, in der Kavität ein zusätzlicher Stutzen vorgesehen werden, um überschüssiges Harz und Kontaminat aus dem Bauteil abzusagen, wodurch das entstehende Faserverbundbauteil deutlich reduzierte Lufteinschlüsse und Störstellen aufweist.

Die Oberform ist, wie in Figur 3 bei einem Teilschnitt erkennbar, an den Stirnseiten rundum geschlossen.

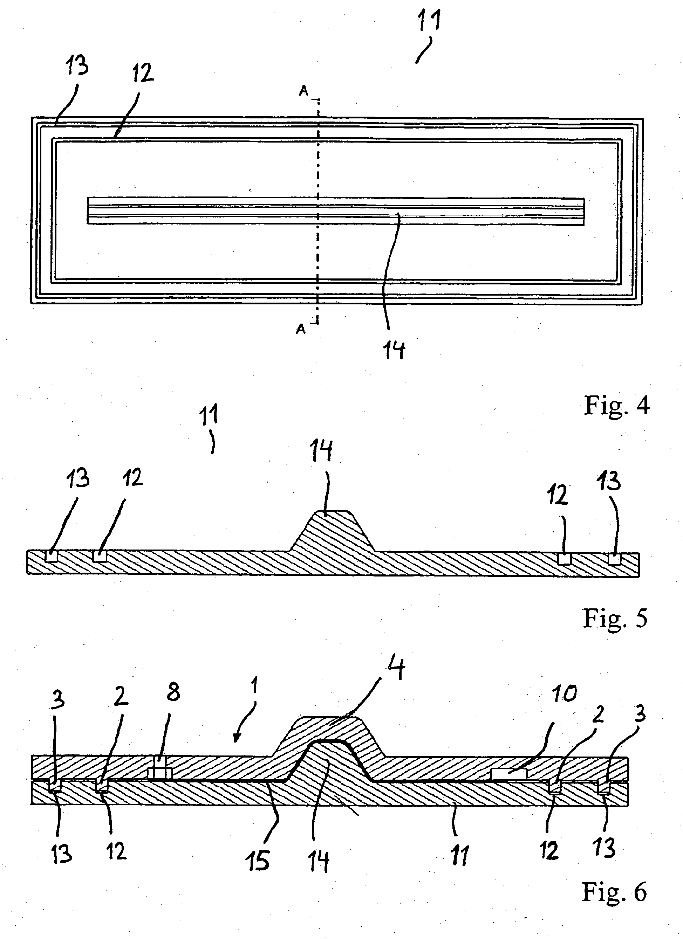

Figur 4 lässt eine Skizze einer Unterform 11 in der Draufsicht auf die Auflagefläche der Oberform mit zwischenliegendem Fasergelege erkennen. Auch die Unterform 11 hat eine innere Abdichtung 12 und eine äußere Abdichtung 13, die in dem dargestellten Ausführungsbeispiel durch ringförmig den Randbereich umlaufende Nuten gebildet wird, in die Wulste der inneren Abdichtung 2 und äußeren Abdichtung 3 der Unterform 1 eintauchen. Selbstverständlich kann die Ausgestaltung auch umgekehrt sein, wobei innere und/oder äußere Abdichtung 2, 3 der Oberform 1 mit Nuten und die innere Abdichtung 12 und/oder äußere Abdichtung 13 komplementär mit Wulsten ausgeführt ist. Andere Geometrien zur Bildung der inneren und äußeren Abdichtung 2, 12, 3, 13 sind denkbar.

In die Unterform 11 sind keine Ein- und Auslässe eingebracht. Es ist lediglich eine der Mulde 5 entsprechende Wölbung 14 im mittleren Bereich vorgesehen, die die gewünschte Kontur des herzustellenden Faserverbundteils bestimmt.

Figur 6 lässt eine Unterform 11 mit darauf aufgelegtem Fasergelege 15 und einer Oberform 1 erkennen, die die Unterform 11 und das Fasergelege 15 abdeckt. Erkennbar ist, dass das Fasergelege 15 in den durch die innere Abdichtung 12 begrenzten Innenraum des aus Unter- und Oberform 11, 1 gebildeten Formwerkzeugs eingelegt wird. Über den Injektionsstutzen 8 kann ein Matrixmaterial (Matrixwerkstoff/Harz) injiziert werden, um das Fasergelege gleichmäßig mit dem Matrixmaterial zu tränken.

Bei diesem beispielhaften Herstellungsverfahren von Faserverbundbauteilen wird Prepreg- und/oder trockenes Fasermaterial zugeschnitten und entsprechend im Laminataufbau außerhalb des Formwerkzeugs ebenerdig gelegt. Die Anwendung von Preforming-Methoden ist dabei nicht erforderlich. Das erzeugte Lagenpaket wird dann auf der einen Hälfte des Formwerkzeugs, vorzugsweise auf dem Unterwerkzeug 11 platziert und durch Aufsetzen des Gegenstücks, vorzugsweise der Oberform 1 in die Gegenform gedrückt.

Durch Integration des Injektionsstutzen 8 mit der Angusslinie 9 und der Kavität 10 in das Formwerkzeug ist eine Herstellung von Faserverbundbauteilen per Injektions- und Prepreg-Technologie möglich. Hierbei ist kein Zusatzmaterial in Form von Vakuumfolie oder Dichtband erforderlich. Ebenso entfällt der Vorgang des Siegelns, da das Formwerkzeug selbst vakuumdicht abschließt. Der damit verbundene Arbeitsaufwand verringert sich.

Das Preforming wird zu dem erheblich erleichtert bzw. entfällt im herkömmlichen Sinne. Die Formgebung erfolgt in einem Schritt beim Zusammensetzen des Formwerkzeuges. Zusatzmaterialien, wie ein Binder, werden nicht benötigt.

Die Flexibilität des Silikonformwerkzeuges überwiegend entlang der Längs- und Hochachse erlaubt die Anpassung der Grundform an unterschiedliche Krümmungen. Dabei bleibt der Querschnitt des Strukturbauteils erhalten. Durch Auflegen des Formwerkzeuges auf eine feste, an die gewünschte Ausrichtung angepasste Unterlage wird dann ein Faserverbundbauteil mit der gewünschten, durch die Kontur von Unter- und Oberform 11, 1 vorgegebenen Kontur und der durch die feste Unterlage vorgegebenen Krümmungen in Längs- und Querrichtung geschaffen. Damit können mit einem einzigen Formwerkzeug unterschiedlich gekrümmte Faserverbundbauteile gleicher Kontur einfach und preiswert hergestellt werden. Ein einziges Formwerkzeug festen Querschnitts kann somit durch Einlegen in Schalenwerkzeuge verschiedener Krümmungsradien zur Herstellung unterschiedlicher Bauteile genutzt werden.

Bei der Herstellung des Faserverbundbauteils ist es auch vorteilhaft, wenn das in der Figur 6 dargestellte Formwerkzeug mit Unterform 11 und aufgelegter Oberform 1 sowie zwischengelegtem Fasergelege 15 in einem Autoklaven prozessiert wird, nachdem über den äußeren Ansaugstutzen 7 das Formwerkzeug gegenüber der Umgebung abgedichtet wurde. Wenn ein hinreichendes Vakuum hergestellt wurde, wird der Werkzeuginnenraum mit dem Injektionsstutzen 8 evakuiert, der in diesem Fall zum Absaugen von Matrixmaterial sowie insbesondere Luftblasen und zur Herstellung eines hinreichenden Vakuums im Innenraum des Formwerkzeuges dient. Nachdem über den Injektionsstutzen 8 ein hinreichendes Vakuum hergestellt wurde, wird das Faserverbundbauteil im Formwerkzeug in einem Autoklaven prozessiert. Die Entformung am Ende des Prozesszyklus, also nach Aushärtung des Bauteils beschränkt sich auf das Abnehmen der Oberform 1.

## Patentansprüche

1. Formwerkzeug zur Herstellung von Faserverbundbauteilen, bei denen ein Faserhalbzeug mit einem Matrixmaterial durchtränkt wird, mit einer Unterform (11) und einer auf die Unterform (11) mit zwischenliegendem Fasergelege (15) auflegbaren Oberform (1), wobei Unterform (11) und Oberform (1) eine aufeinander und auf die gewünschte Form des Faserverbundbauteils abgestimmte Kontur haben, wobei die Oberform (1) und die Unterform (11) aus einem flexiblen Material gebildet sind, **dadurch gekennzeichnet, dass** entweder die Oberform (1) oder die Unterform (11) zwei voneinander beabstandet angeordnete, ringförmig umlaufende Wulste haben und die gegenüberliegende Form den Wulsten zugeordnete Nuten aufweist, so dass die Wulsten in die Nuten eingeführt werden können, so dass eine innere Abdichtung (2, 12) und eine äußere Abdichtung (3, 13) geschaffen wird, und dass im Zwischenraum zwischen der inneren Abdichtung (2, 12) und der äußeren Abdichtung (3, 13) mindestens ein Ansaugstutzen (7) für eine Absaugeinheit zur Herstellung eines Unterdrucks zum Abdichten in dem Zwischenraum vorgesehen ist.

2. Formwerkzeug nach Anspruch 1, **dadurch gekennzeichnet, dass** in die Unterform (11) und/oder die Oberform (1) mindestens ein Injektionsstutzen (8) für das Matrixmaterial integriert ist.

3. Formwerkzeug nach einem der vorhergehenden Ansprüche, **dadurch gekennzeichnet, dass** eine Angusslinie (9) mit dem Injektionsstutzen (8) verbunden und an der Auflageseite der Oberform (1) und/oder Unterform (11) für die auf die Auflageseite mit zwischenliegendem Fasergelege (15) auflegbare Gegenform in die Oberform (1) und/oder Unterform (11) eingebracht ist.

4. Formwerkzeug nach einem der vorhergehenden Ansprüche, **dadurch gekennzeichnet, dass** eine der Formen von Unterform (11) und/oder Oberform (1) auf der Auflageseite für die Gegenform mindestens eine ringförmig umlaufende Nut und die Gegenform mindestens einen an die zugeordnete Nut angepassten, die Gegenform ringförmig umlaufenden Wulst zum Eintauchen in die Nut und Abdichten des Formwerkzeuges nach Außen hat.

5. Formwerkzeug nach einem der vorhergehenden Ansprüche, **dadurch gekennzeichnet, dass** an der Auflageseite der Oberform (1) und/oder Unterform (11) für die auf die Auflageseite mit zwischenliegendem Fasergelege auflegbare Gegenform eine Kavität (10) in die Oberform (1) und/oder Unterform (11) eingebracht ist.

6. Verfahren zur Herstellung von Faserverbundbauteilen mit einem Formwerkzeug nach einem vorhergehenden Ansprüche, durch Auflegen eines Fasergeleges auf eine Unterform (11), Schließen des Formwerkzeuges und Auflegen einer Oberform (1) auf die Unterform (11) mit zwischenliegendem Fasergelege (15), mit
- Vorgeben einer definierten dreidimensionalen Ausrichtung des Faserverbundbauteils durch Auflegen des flexiblen Formwerkzeuges auf eine feste, an die gewünschte Ausrichtung angepasste Unterlage,
- Aushärten des mit einem Matrixmaterial durchtränkten Faserverbundbauteils und
Abdichten des Formwerkzeuges durch Evakuieren eines Zwischenraumes zwischen einer inneren Abdichtung (2, 12) und einer äußeren Abdichtung (3, 13), die durch Einführen von ringförmig durchlaufenden Wulsten einer Form in zugeordnete Nuten der gegenüberliegenden Formen geschaffen werden.

7. Verfahren nach Anspruch 6, **gekennzeichnet durch** Einlegen eines harzgetränkten Fasergeleges zwischen Unterform (11) und Oberform (1), Evakuieren des das Fasergelege (15) enthaltenen Zwischenraumes und Aushärten des durchtränkten Faserverbundbauteils.

8. Verfahren nach Anspruch 6 oder 7, **gekennzeichnet durch** Einlegen von Fasergelege zwischen Unterform (11) und Oberform (1), Injizieren von Matrixmaterial in den das Fasergelege (15) enthaltenen Zwischenraum und Aushärten des durchtränkten Faserverbundbauteils.

## Claims

1. Mold for manufacture of fiber composite parts where a semi-finished fiber is saturated with a matrix material, including a lower-mold (11) and an intermediate fiber ply (15) with an upper-mold (1) placed onto the lower-mold (11) whereby the lower-mold (11) and the upper-mold (1) are designed with a matching contour for the desired shape of the fibre composite part, wherein said upper-mold (1) and said lower-mold (11) are made of a flexible material **characterized by** either said upper-mold (1) or said lower-mold(II) have two spaced apart annular beads and the opposing mold has grooves adapted to the beads so that said beads can insert into said grooves, so that an inner seal (2, 12) and an outer seal (3, 13) is created and at least one suction nozzle (7) is provided in a gap between the inner seal (3, 13) and the outer seal (3, 13) for a suction unit to produce a vacuum for sealing in the gap.

2. Mold according to claim 1, **characterized by** said lower mold (11) and/or said upper mold (1) at least one injection nozzle (8) integrated for the matrix materials.

3. Mold according one of the foregoing claims, **characterized by** sprue line (9) connected with the injection nozzle (8) and inserted at the base of said upper mold (1) and/or said lower mold (11) for the superposable counter mold placeable at the base of said upper mold (1) and/or said lower mold (11) with intermediate fiber ply (15).

4. Mold according one of the foregoing claims, **characterized by** the fact that at least one mold of lower mold (11) and/or upper mold (1) does have at the support side for the mating shape at least one annular groove and the mating shape at least an annular bead adapted to the groove to immerse into the groove and sealing of the mold towards the outside.

5. Mold according one of the foregoing claims, **characterized by** the fact that at the base of said upper mold (1) and/or said lower mold (11) a cavity (10) has been provided for the superposable mating shape placeable on the support side with intermediate fiber ply.

6. Method for manufacture of fiber composite parts with a mold based on one of the forgoing claims by placing a fiber ply onto a lower mold (11) and closing the mold by placing an upper mold (1) onto the lower mold (11) with intermediate fiber ply, with
- Predefinition of a defined three-dimensional orientation of the fiber composite component by placing of the flexible mold onto a firm to the desired orientation adapted support surface and
- Curing of the fiber composite saturated with a matrix material, and
- Sealing of the mold by evacuation of a gap between an inner seal (2, 12) and an outer seal (3, 12) which is created by immersion of annular beads of a mold into the adapted annular grooves of the opposing mold.

7. Method in accordance to claim 6, **characterized by** inserting a resin impregnated fiber ply between the lower mold (11) and upper mold (1), evacuation of gap containing the fiber ply (15) and curing of the saturated fiber composite component.

8. Method in accordance to claim 6 or 7, **characterized by** inserting of a fiber ply between lower mold (1) and upper mold (1), injection of matrix material into the gap containing the fiber ply (15) and curing of the saturated fiber composite component.

## Revendications

1. Outil de formage pour la fabrication de composants composites en fibres, dans lesquels un demi-produit de fibres est imprégné avec un matériau de matrice, avec un moule inférieur (11) et un moule supérieur (1) à poser sur le moule inférieur (11) avec un non-tissé de fibres intercalaire (15), dans lequel le moule inférieur (11) et le moule supérieur (1) présentent un contour adapté l'un à l'autre et à la forme désirée du composant composite en fibres, dans lequel le moule supérieur (1) et le moule inférieur (11) sont formés d'un matériau souple, **caractérisé en ce que** soit le moule supérieur (1) soit le moule inférieur (11) présentent deux bourrelets disposés à distance l'un de l'autre et périphériques annulaires et le moule opposé présente des rainures associées aux bourrelets de sorte que les bourrelets puissent être insérés dans les rainures, de telle manière qu'un joint d'étanchéité intérieur (2, 12) et un joint d'étanchéité extérieur (3, 13) soient créés, et **en ce qu'**il est prévu dans l'espace intermédiaire entre le joint d'étanchéité intérieur (2, 12) et le joint d'étanchéité extérieur (3, 13) au moins un tuyau d'aspiration (7) pour une unité d'aspiration permettant de créer une dépression pour l'étanchéité dans l'espace intermédiaire.

2. Outil de formage selon la revendication 1, **caractérisé en ce qu'**au moins un tuyau d'injection (8) pour le matériau de matrice est intégré dans le moule inférieur (11) et/ou dans le moule supérieur (1).

3. Outil de formage selon l'une quelconque des revendications précédentes, **caractérisé en ce qu'**une ligne de coulée (9) est raccordée au tuyau d'injection (8) et est introduite dans le moule supérieur (1) et/ou le moule inférieur (11) à la face d'appui du moule supérieur (1) et/ou du moule inférieur (11) destinée au moule opposé à poser sur la face d'appui avec le non-tissé de fibres intercalaire (15).

4. Outil de formage selon l'une quelconque des revendications précédentes, **caractérisé en ce qu'**un des moules du moule inférieur (11) et/ou du moule supérieur (1) présente, sur la face d'appui destinée au moule opposé, au moins une rainure périphérique annulaire et le moule opposé présente au moins un bourrelet adapté à la rainure associée et entourant sous forme annulaire le moule opposé, pour l'insérer dans la rainure et rendre l'outil de formage étanche vers l'extérieur.

5. Outil de formage selon l'une quelconque des revendications précédentes, **caractérisé en ce qu'**une cavité (10) est pratiquée dans le moule supérieur (1) et/ou le moule inférieur (11), à la face d'appui du moule supérieur (1) et/ou du moule inférieur (11) destinée au moule opposé à poser sur la face d'appui avec le non-tissé de fibres intercalaire.

6. Procédé de fabrication de composants composites en fibres avec un outil de formage selon l'une quelconque des revendications précédentes, par pose d'un non-tissé de fibres sur un moule inférieur (11), fermeture de l'outil de formage et pose d'un moule supérieur (1) sur le moule inférieur (11) avec un non-tissé de fibres intercalaire (15), avec
- fixation d'une orientation tridimensionnelle définie du composant composite en fibres par pose de l'outil de formage souple sur un support fixe adapté à l'orientation désirée,
- durcissement du composant composite imprégné avec un matériau de matrice, et étanchéification de l'outil de formage par évacuation d'un espace intermédiaire entre un joint d'étanchéité intérieur (2, 12) et un joint d'étanchéité extérieur (3, 13), qui ont été créés par insertion de bourrelets annulaires continus d'un moule dans des rainures associées du moule opposé.

7. Procédé selon la revendication 6, **caractérisé par** l'insertion d'un non-tissé de fibres imprégné de résine entre le moule inférieur (11) et le moule supérieur (1), évacuation de l'espace intermédiaire contenant le non-tissé de fibres (15) et durcissement du composant composite en fibres imprégné.

8. Procédé selon la revendication 6 ou 7, **caractérisé par** l'insertion de non-tissé de fibres entre le moule inférieur (11) et le moule supérieur (1), injection de matériau de matrice dans l'espace intermédiaire contenant le non-tissé de fibres (15) et durcissement du composant composite en fibres imprégné.
